# FASCICULE DE BREVET EUROPEEN

(11) **EP 2 364 489 B1**
(45) Date de publication et mention de la délivrance du brevet: **29.05.2013**
(21) Numéro de dépôt: 09775140.8
(22) Date de dépôt: 30.11.2009
(51) Int. Cl.: G06T 1/00

(54) **PROCÉDÉ ET DISPOSITIF POUR L'ENFOUISSEMENT D'UNE SÉQUENCE BINAIRE DANS UN FLUX VIDEO COMPRESSÉ**
VERFAHREN UND EINRICHTUNG ZUM EINBETTEN EINER BINÄRSEQUENZ IN EINEN KOMPRIMIERTEN VIDEOSTROM
METHOD AND DEVICE FOR EMBEDDING A BINARY SEQUENCE IN A COMPRESSED VIDEO STREAM

(30) Priorité: 05.12.2008 FR 0806837
(43) Date de publication de la demande: 14.09.2011
(73) Titulaire: THALES, 92200 Neuilly-sur-Seine (FR)
(72) Inventeur: LE BARZ, Cédric, F-91470 Limours En Hurepoix (FR); LENY, Marc, F-92000 Nanterre (FR)
(74) Mandataire: Lucas, Laurent Jacques
(86) Numéro de dépôt international: PCT/EP2009/066069
(87) Numéro de publication internationale: WO 2010/063680

(56) Documents cités:
- WO-A-2007/032760
- COATRIEUX G ET AL: "Strict integrity control of biomedical images" PROCEEDINGS OF THE SPIE - INT. SOC. OPT. ENGINEERING USA, vol. 4314, 2001, pages 229-240, XP002544035
- LIN C-Y ET AL: "A ROBUST IMAGE AUTHENTICATION METHOD DISTINGUISHING JPEG COMPRESSION FROM MALICIOUS MANIPULATION" IEEE TRANS. ON CIRCUITS AND SYSTEMS FOR VIDEO TECHNOLOGY, IEEE, PISCATAWAY, US, vol. 11, no. 2, 1 février 2001 (2001-02-01), pages 153-168, XP001039014
- FRIDRICH J: "Visual hash for oblivious watermarking" PROCEEDINGS OF THE SPIE - THE INTERNATIONAL SOCIETY FOR OPTICAL ENGINEERING SPIE-INT. SOC. OPT. ENG USA, vol. 3971, 2000, pages 286-294, XP002534637

## Description

L'invention concerne un procédé et un dispositif permettant d'enfouir un ou plusieurs types d'information représentée par une séquence binaire dans un flux vidéo déjà compressé avant sa transmission. Elle peut être utilisée, en particulier, pour vérifier l'intégrité partielle d'un flux vidéo et a notamment pour objectif de certifier que les zones d'intérêt d'une image dudit flux vidéo n'ont pas été modifiées lors de la transmission. L'invention s'applique, par exemple, dans un contexte de transmission numérique de vidéos dont on cherche à garantir que le contenu et en particulier certaines zones d'une image plus critiques en terme d'importance pour l'utilisateur final n'ont pas été modifiées par un intermédiaire malveillant; voire, par exemple, le document: Gouenou Coatrieux, Henri Maitre, Bulent Sankur, "Strict integrity control of biomedical images". Proc. SPIE 4314, Security and Watermarking of Multimedia Contents III, 229, August 1, 2001, pages 229-240. Ces zones peuvent correspondre, par exemple, à des objets mobiles. Un autre cas d'application de l'invention consiste à enfouir dans le flux vidéo compressé, un message de haut niveau fourni par une étape d'analyse dans le domaine compressé dudit flux vidéo compressé. Ce type d'application permet par exemple à l'utilisateur final d'obtenir des informations sur le contenu de la séquence vidéo sans avoir à décompresser le flux vidéo au préalable.

L'invention peut, entre autre, être utilisée dans des applications mettant en oeuvre la norme définie en commun par l'ISO MPEG et le groupe video coding de l'ITU-T dite H.264 ou MPEG-4 AVC (advanced video coding) qui est une norme vidéo fournissant une compression plus efficace que les normes vidéo antérieures tout en présentant une complexité de mise en oeuvre raisonnable et orientée vers les applications réseau.

Dans la suite du document, le terme « premier plan » désigne le ou les objets mobiles dans une séquence vidéo, par exemple, un piéton, un véhicule, une molécule en imagerie médicale. A contrario, la désignation « arrière plan » est utilisée en référence à l'environnement ainsi qu'aux objets fixes. Ceci comprend, par exemple, le sol, les bâtiments, les arbres qui ne sont pas parfaitement immobiles ou encore les voitures stationnées.

Dans la description, l'expression « flux vidéo compressé » et l'expression « séquence vidéo compressée » font référence au même objet, à savoir un flux de données en sortie d'un module de compression vidéo dont l'entrée est une vidéo capturée en temps réel par une caméra ou encore une vidéo pré-enregistrée dans un fichier. L'expression « marqueurs par tatouage » fait référence, dans la suite de la description, à une information enfouie au sein d'un flux image ou vidéo via un procédé de tatouage.

Les systèmes de vidéo surveillance sont de plus en plus répandus. Ces derniers utilisent pour transmettre les informations vidéos ou autres, des systèmes de diffusion composés de réseaux hétérogènes filaires ou sans fils dont l'architecture peut être complexe. A ce sujet un des problèmes qui se pose est l'obtention d'informations sur le contenu de la séquence vidéo transmise sans décompresser au préalable le flux vidéo compressé reçu. Le type d'informations visé peut, par exemple, servir à garantir l'intégrité du contenu de séquences vidéo lors de leur diffusion dans un contexte où elles peuvent être interceptées et modifiées par un tiers malveillant. En particulier, certaines zones d'une séquence vidéo peuvent être d'un intérêt plus important pour l'utilisateur, par exemple les zones identifiant des objets mobiles, par opposition à des zones de moindre intérêt, par exemple des zones comme le sol ou le ciel pour lesquelles la garantie de l'intégrité est moins cruciale. Un autre type d'informations utile à l'utilisateur peut porter, par exemple, sur les caractéristiques des zones d'intérêts d'une image, en particulier des informations sur la taille ou la couleur des dites zones.

L'art antérieur comprend diverses méthodes permettant d'enfouir une information au sein d'un flux vidéo, en particulier, les techniques de tatouage numérique de flux multimédia comme celle décrite dans la référence suivante « Combining low-frequency and spread spectrum watermarking », SPIE proceedings series , 1999, Jiri Fridrich. Ce procédé consiste à tatouer l'intégralité d'une image et s'effectue sur des flux vidéo non compressés, ce qui présente comme inconvénient d'être complexe à mettre en oeuvre sur des processeurs à ressources limitées.

D'autres techniques permettant d'enfouir une information par tatouage dans un flux vidéo déjà compressé existent mais elles ne permettent pas d'identifier et de traiter uniquement certaines zones de plus grande importance au sein d'une image et non l'intégralité du contenu de l'image. Par exemple, la demande de brevet français FR2896938 décrit un procédé de tatouage de données numériques utilisant les coefficients de transformée en cosinus discrète plus connue sous l'appellation anglo-saxonne Discrete Cosine Transform (DCT) pour enfouir une signature au sein d'une vidéo. L'ensemble de la vidéo est considérée ici sans effectuer au préalable une analyse permettant de déterminer les zones les plus critiques, du point de vue de l'utilisateur.

D'autres problèmes ne sont pas résolus par l'art antérieur comme par exemple :
- le tatouage d'une image sans modification aucune des zones d'intérêt et sans décompression de la séquence vidéo,
- la génération d'informations pertinentes concernant les dites zones d'intérêt et leur enfouissement dans le flux vidéo compressé, toujours sans décompression de la séquence vidéo,
- l'insertion de marqueurs par tatouage permettant de vérifier uniquement l'intégrité de certaines zones pertinentes au sein de la séquence vidéo et non l'ensemble de la séquence comme cela est le cas plus traditionnellement.

Un des objets de la présente invention est d'offrir un procédé d'enfouissement d'une information sous forme de séquence binaire dans un flux vidéo compressé. Cette information concerne certaines zones d'intérêts de la séquence vidéo et a pour objet, par exemple, une vérification de l'intégrité des dites zones ou une alerte sur des éléments caractéristiques des dites zones telles que la taille ou la couleur. Un autre objet de l'invention est de permettre l'insertion de marqueurs par tatouage sans modifier les zones d'intérêt de la séquence. A cet effet, l'invention a pour objet un procédé d'enfouissement d'une séquence binaire dans une séquence vidéo ou un flux vidéo compressé, ledit flux pouvant être décomposé en plusieurs types d'objets, le procédé s'appliquant sur au moins une image contenue dans ladite séquence vidéo caractérisé en ce qu'il comporte au moins les étapes suivantes :
a) analyser la séquence vidéo dans le domaine compressé afin de définir pour une image compressée donnée au moins un premier type d'objets ou groupe d'objets à traiter définissant une zone d'intérêt,
b) générer une carte de tatouage définissant l'ensemble des blocs de pixels de la séquence binaire éligibles pour l'opération d'enfouissement, ainsi que deux coefficients C₁ et C₂ issus d'une transformée en fréquence pour chacun des dits blocs, lesdits coefficients C₁ et C₂ étant tirés aléatoirement parmi l'ensemble des coefficients obtenus par application d'une transformée en fréquence sur un bloc de pixels donné,
c) pour l'image compressée courante, exclure de la carte de tatouage les blocs associés à la zone d'intérêt, ainsi que ceux dont les coefficients C₁ et C₂ définis par la carte de tatouage ne répondent pas au critère suivant :
   abs(abs(C₁)-abs(C₂)) < S où S est un seuil prédéterminé et abs() la fonction valeur absolue d'un entier.
d) appliquer une fonction de tatouage numérique sur chaque bloc disponible obtenu à l'étape c) afin d'obtenir un flux compressé tatoué par une séquence binaire de la façon suivante :
   ➢ Pour insérer un bit « 1 » de ladite séquence binaire,
      - Si abs(C₁) > abs(C₂), on ne change rien
      - Si abs(C₁) ≤ abs(C₂), on calcule s = abs(C₂) - abs(C₁) et on modifie la valeur de C₁ par :
         C₁ = C₁ + ε + 1 si C₁ est positif
         C₁ = C₁ - ε - 1 si C₁ est négatif
   ➢ Pour insérer un bit « 0 » de ladite séquence binaire,
      - Si abs(C₁) < abs(C₂), on ne change rien
      - Si abs(C₁) ≥ abs(C₂), on calcule ε = abs(C₁) - abs(C₂) et on modifie la valeur de C₂ par :
         C₂ = C₂ + ε + 1 si C₂ est positif
         C₂ = C₂ - ε - 1 si C₂ est négatif
            Selon un mode de réalisation, la séquence binaire à enfouir est un condensé de l'image obtenu via l'étape suivante :
            ➢ Concaténer les coefficients issus de la transformée en fréquence des blocs appartenant aux dits objets ou groupes d'objets obtenus définissant une zone d'intérêt et appliquer au résultat une fonction de hachage visuel générant en sortie un condensé de l'image.

Selon un mode de réalisation, le condensé de l'image est crypté via une fonction de cryptage.

Selon un mode de réalisation, le flux compressé tatoué est traité afin de vérifier l'intégrité de la séquence vidéo selon les étapes suivantes :
➢ analyser le flux compressé tatoué dans le domaine compressé afin de définir pour une image compressée donnée au moins un premier type d'objets ou groupe d'objets à traiter définissant une zone d'intérêt,
➢ concaténer les coefficients issus de la transformée en fréquence des blocs appartenant aux dits objets ou groupes d'objets obtenus définissant une zone d'intérêt et appliquer au résultat une fonction de hachage visuel générant en sortie un condensé de l'image,
➢ récupérer le condensé tatoué dans le flux compressé tatoué à partir de la carte de tatouage
➢ effectuer une comparaison dudit condensé tatoué avec le condensé.

Selon un mode de réalisation, le flux compressé tatoué est traité afin de vérifier l'intégrité de la séquence vidéo selon les étapes suivantes :
➢ analyser le flux compressé tatoué dans le domaine compressé afin de définir pour une image compressée donnée au moins un premier type d'objets ou groupe d'objets à traiter définissant une zone d'intérêt,
➢ concaténer les coefficients issus de la transformée en fréquence des blocs appartenant aux dits objets ou groupes d'objets obtenus définissant une zone d'intérêt et appliquer au résultat une fonction de hachage visuel générant en sortie un condensé de l'image,
➢ appliquer une fonction de cryptage au condensé précédemment obtenu afin d'obtenir un condensé crypté,
➢ récupérer le condensé tatoué dans le flux compressé tatoué à partir de la carte de tatouage,
➢ effectuer une comparaison dudit condensé tatoué avec le condensé crypté.

Selon un mode de réalisation, la fonction de cryptage met en oeuvre un algorithme de chiffrement asymétrique ou un algorithme de chiffrement AES (Advanced Encryption Standard).

Selon un mode de réalisation, la fonction de hachage visuel met en oeuvre l'algorithme SHA-1 et le condensé crypté a une taille de 160 bits.

Selon un mode de réalisation, la séquence binaire à enfouir est un message comportant une indication sur les caractéristiques des zones d'intérêt et est fourni par l'étape d'analyse dans le domaine compressé.

Selon un mode de réalisation, la séquence vidéo est produite par un standard MPEG ou un standard ITU.

L'invention a également pour objet un dispositif pour tatouer numériquement au moins une partie d'un flux vidéo ou d'une séquence vidéo compressée comportant un émetteur et un récepteur caractérisé en ce que :
➢ ledit émetteur comporte au moins les éléments suivants : un module d'analyse dans le domaine compressé, un module de hachage visuel, un module de tatouage numérique et un module de transmission du flux tatoué,
➢ ledit récepteur comporte au moins les éléments suivants : un module de transmission, un module d'analyse, un module de hachage visuel, un module de validation d'intégrité.

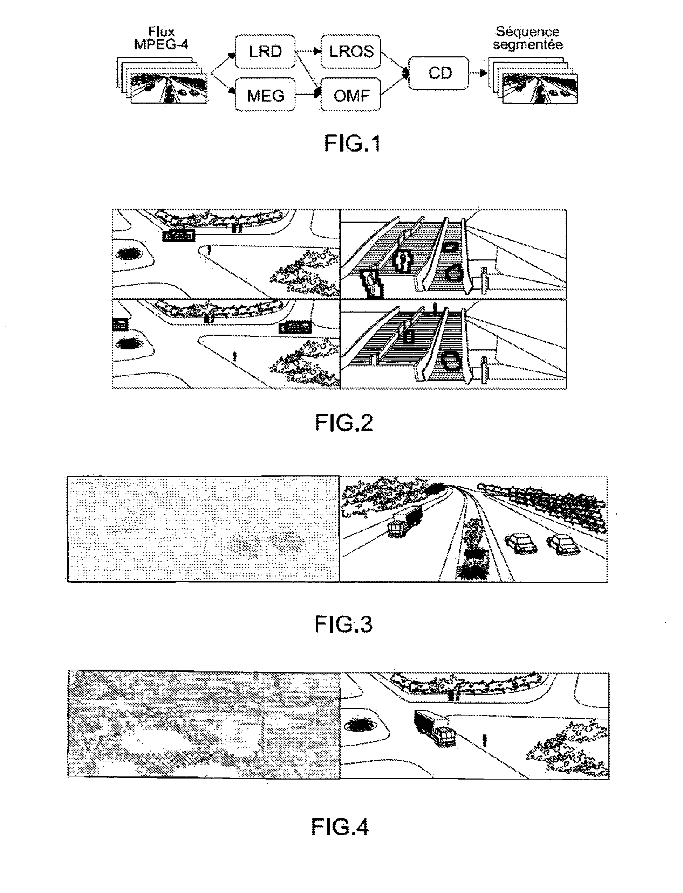

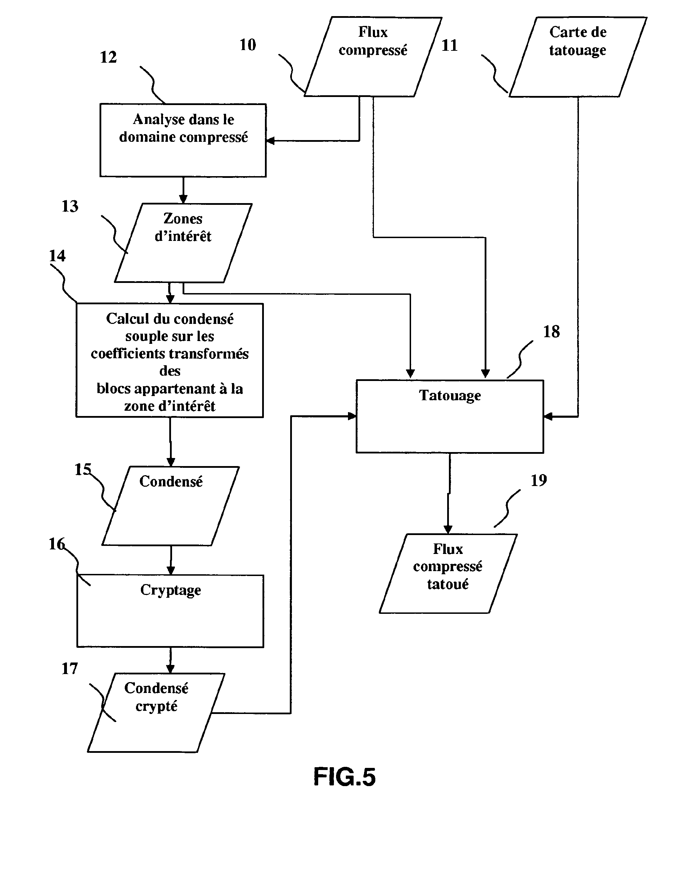

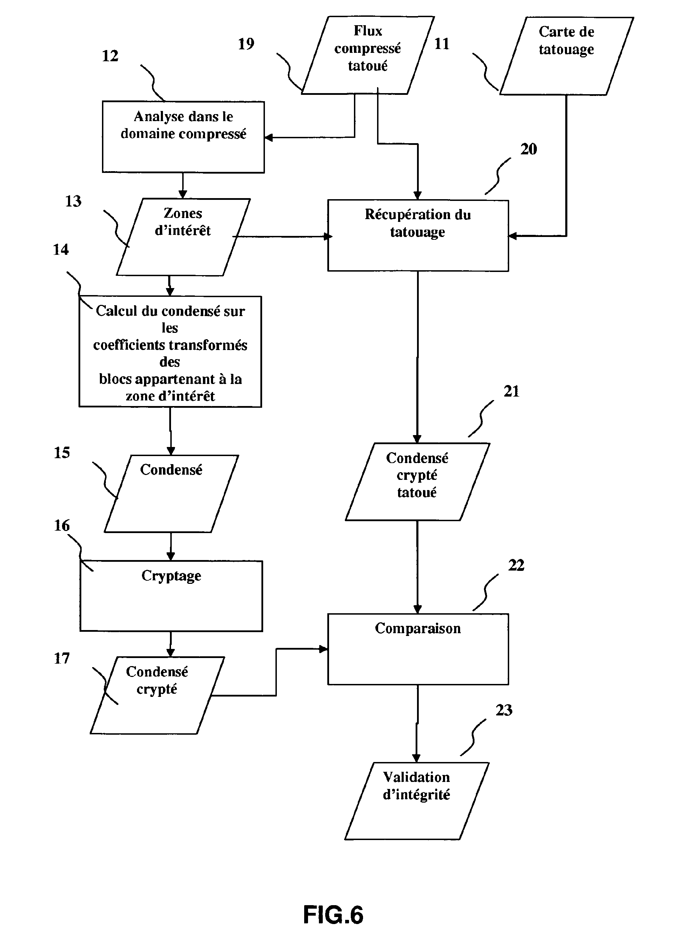

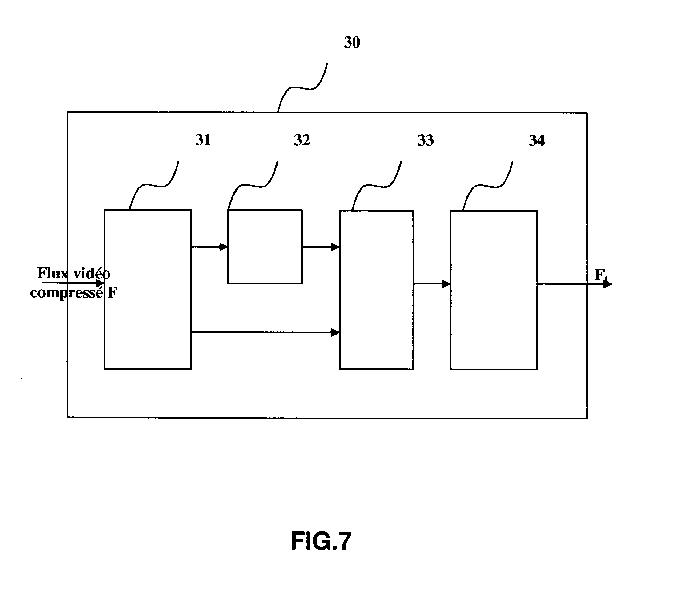

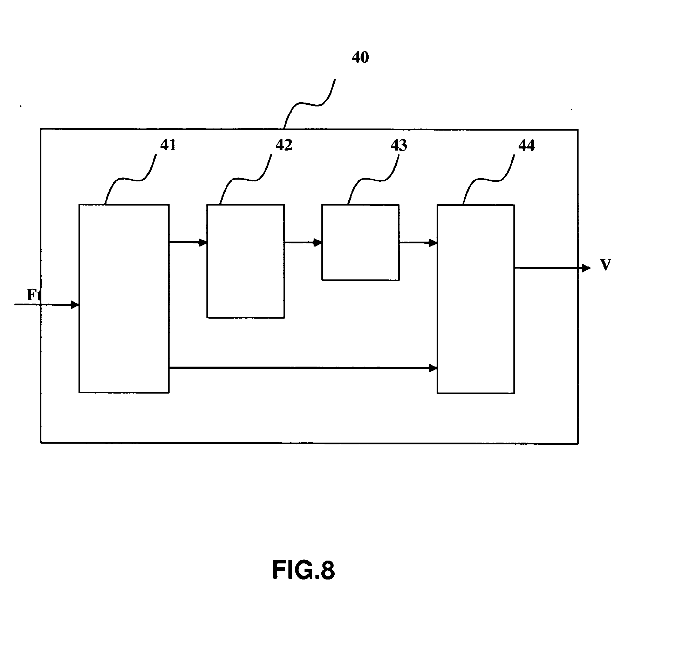

D'autres caractéristiques et avantages du procédé et du dispositif selon l'invention apparaîtront mieux à la lecture de la description qui suit d'un exemple de réalisation donné à titre illustratif et nullement limitatif annexé des figures qui représentent :
➢ Les figures 1 à 4, les résultats obtenus par une analyse dans le domaine compressé,
➢ La figure 5, un exemple de procédé de tatouage selon l'invention appliquée à un flux vidéo en cours de compression,
➢ La figure 6, un exemple de procédé de vérification d'intégrité sur un flux compressé tatoué via le procédé selon l'invention,
➢ La figure 7, un exemple de schéma pour un émetteur vidéo adapté à mettre en oeuvre le procédé de tatouage selon l'invention, et
➢ La figure 8, un exemple de schéma pour un récepteur vidéo adapté à mettre en oeuvre le procédé de tatouage selon l'invention et permettant la vérification de l'intégrité de la séquence vidéo.

Afin de mieux faire comprendre le fonctionnement du procédé selon l'invention, la description comprend un rappel sur la manière d'effectuer une analyse dans le domaine compressé, tel qu'il est décrit par exemple, dans la demande de brevet US2006/188013 en référence aux figures 1, 2, 3 et 4 et aussi dans les deux références suivantes :
Leny, Nicholson, Prêteux, "De l'estimation de mouvement pour l'analyse temps réel de vidéos dans le domaine compressé", GRETSI, 2007 ;
Leny, Prêteux, Nicholson, "Statistical motion vector analysis for object tracking in compressed video streams", SPIE Electronic Imaging, San Jose, 2008.

Dans la suite du texte le terme « bloc » fait référence à un ensemble de pixels d'une image formant ensemble une matrice et le terme « bloc transformé» identifie le résultat obtenu via une fonction de transformée permettant un passage dans le domaine fréquentiel, appliqué audit bloc. Par exemple, un bloc de 8x8 pixels représenté par une matrice sera transformé en une matrice à 8 lignes et 8 colonnes contenant 64 coefficients Cᵢ.

En résumé certaines techniques utilisées dans les standards MPEG et exposées dans ces articles consistent à diviser la compression vidéo en deux étapes. La première étape vise à compresser une image fixe. L'image est tout d'abord divisée en blocs de pixels (de 4x4 à 16x16 selon les standards MPEG-1/2/4), qui subissent, par la suite, une transformée permettant un passage dans le domaine fréquentiel telle que la transformée en cosinus discrète (DCT) ou la transformée entière, puis une quantification permet d'approximer ou de supprimer les hautes fréquences auxquelles l'oeil est moins sensible. Enfin les données quantifiées sont codées entropiquement. A cet effet, la quantification permet de supprimer ou atténuer les hautes fréquences moins sensibles à l'oeil et ainsi de réduire la quantité d'informations. La seconde étape a notamment pour objectif de réduire la redondance temporelle. Elle permet de prédire une image à partir d'une ou plusieurs autres image(s) précédemment décodée(s) au sein de la même séquence (prédiction de mouvement). Pour cela, le processus recherche dans ces images de référence le bloc qui correspond le mieux à la prédiction souhaitée. Seul un vecteur (Vecteur Estimation de Mouvement, également connu sous l'appellation anglo-saxonne Motion Vector), correspondant au déplacement du bloc entre les deux images ainsi qu'une erreur résiduelle permettant de raffiner le rendu visuel sont conservés.

Ces vecteurs ne correspondent toutefois pas nécessairement à un mouvement réel d'un objet dans la séquence vidéo mais peuvent s'apparenter à du bruit. Différentes étapes sont donc nécessaires pour utiliser ces informations afin d'identifier les objets mobiles. Les travaux décrits dans la publication précitée de Leny et al, « De l'estimation de mouvement pour l'analyse temps réel de vidéos dans le domaine compressé », et dans la demande de brevet US02006/18 8013 précitée ont permis de délimiter cinq fonctions rendant l'analyse dans le domaine compressé possible, ces fonctions et les modules les mettant en oeuvre sont représentées à la figure 1 :
1) un décodeur basse résolution (LRD - Low-Res Decoder) permet de reconstruire l'intégralité d'une séquence à la résolution du bloc, supprimant à cette échelle la prédiction de mouvement ;
2) un générateur de vecteurs estimation de mouvement (MEG - Motion Estimation Generator) détermine quant à lui des vecteurs pour l'ensemble des blocs que le codeur a codé en mode "Intra" (au sein d'images Intra ou prédites) ;
3) un module de segmentation basse résolution d'objets (LROS - Low-Res Object Segmentation) qui s'appuie pour sa part sur une estimation du fond dans le domaine compressé grâce aux séquences reconstruites par le LRD et donne donc une première estimation des objets mobiles ;
4) un filtre d'objets basé sur le mouvement (OMF - Object Motion Filtering) qui utilise les vecteurs en sortie du MEG pour déterminer les zones mobiles à partir de l'estimation de mouvement ;
5) enfin un module permettant d'établir une décision coopérative (CD - Cooperative Decision) à partir de ces deux segmentations qui prend en compte les spécificités de chaque module selon le type d'image analysée (Intra ou prédite).

L'intérêt principal de l'analyse dans le domaine compressé porte sur les temps de calcul et les besoins en mémoire qui sont considérablement réduits par rapport aux outils d'analyse classiques. En s'appuyant sur le travail effectué au moment de la compression vidéo, les temps d'analyse sont actuellement de 10 à 20 fois le temps réel (250 à 500 images traitées par seconde) pour des images 720x576 4:2:0.

Un des inconvénients de l'analyse dans le domaine compressé telle que décrite dans les documents précités est que le travail est effectué sur l'équivalent d'images basse résolution en manipulant des blocs composés de groupes de pixels. Il en résulte que l'image est analysée avec moins de précision qu'en mettant en oeuvre les algorithmes usuels utilisées dans le domaine non compressé. De plus, les objets trop petits par rapport au découpage en blocs peuvent passer inaperçus.

Les résultats obtenus par l'analyse dans le domaine compressé sont illustrés par la figure 2 qui montre l'identification de zones contenant des objets mobiles. La figure 3 schématise l'extraction de données spécifiques telles que les vecteurs estimation de mouvement représentés sur la gauche de la figure 3 et la figure 4 des cartes de confiance basse résolution obtenues correspondant aux contours de l'image, également représentées sur la gauche de la figure.

La figure 5 schématise un exemple de réalisation du procédé selon l'invention dans lequel, un condensé des zones d'intérêt d'une image est calculé par exemple via une fonction de signature souple, plus connue de l'Homme du métier sous le terme anglo-saxon «visual hash». Ce condensé est ensuite enfoui dans le flux vidéo compressé à transmettre.

Le flux vidéo compressé 10 est transmis à une première étape d'analyse 12 dans le domaine compressé connue de l'Homme du métier ayant pour fonction d'extraire les zones d'intérêt définies par l'utilisateur selon des critères préétablis. Ainsi, le procédé dispose par exemple, d'une séquence de masques comprenant des blobs (régions ayant reçues un label identique) liés aux objets mobiles. Les masques peuvent être des masques binaires.

Cette analyse dans le domaine compressé a permis de définir pour chaque image ou pour un groupe d'images défini GoP, d'une part différentes zones Z1i appartenant à un premier plan P1 et d'autres zones Z2i appartenant à un deuxième plan P2 d'une des images de la séquence vidéo. L'analyse peut être effectuée en mettant en oeuvre le procédé décrit dans la demande de brevet US2006/188013 précitée. Toutefois, tout procédé permettant d'obtenir une sortie de l'étape d'analyse se présentant sous forme de masques par image, ou tout autre format ou paramètres associés à la séquence vidéo compressée analysée pourra aussi être mis en oeuvre en sortie de l'étape d'analyse dans le domaine compressé. A l'issue de l'étape d'analyse, le procédé a permis d'isoler les zones d'intérêt, 13, Z1i dont on souhaite protéger l'intégrité du contenu. Dans un autre mode de réalisation, les zones d'intérêt Z1i peuvent être à contrario des objets fixes dont on cherche à identifier sans ambigüité le contenu, par exemple des panneaux de signalisation. Dans un cas d'application générale, le procédé selon l'invention s'applique à tout type de zone d'intérêt que l'étape d'analyse 12 a permis d'isoler.

Afin de permettre une authentification fiable des zones d'intérêts au sein d'une image, il est nécessaire de générer une signature qui soit directement liée au contenu desdites zones. Pour se faire, le procédé utilise par exemple une technique connue de l'Homme du métier sous la dénomination anglo-saxonne « visual hash » ou fonction de hachage visuel en français. On appelle fonction de hachage visuel un procédé permettant de calculer un condensé d'une image (ou de tout type de données multimédia). Contrairement aux fonctions de hachage cryptographique, une telle fonction permet de générer un condensé identique pour deux images différentes, sous réserve que celles-ci soient suffisamment proches du point de vue perceptuel. Le condensé résultant de cette opération est aussi appelé signature souple, le qualificatif « souple » étant employé par opposition au qualificatif « strict ». Par contre, le condensé doit être différent dès lors que l'image subit une altération de sa sémantique, par exemple l'ajout d'un personnage ou d'un objet dans une scène, la modification d'images ou de texte. De ce fait, la problématique de définition formelle de la sémantique d'une image rend la conception de fonctions de hachage visuel délicate. Néanmoins, il est possible de définir un critère de localité, qui peut être considéré comme valide dans la grande majorité des cas. Une altération contingente, c'est-à-dire due à une compression du flux vidéo par exemple, va donner lieu à des modifications du signal de faible amplitude, mais réparties de manière relativement uniforme sur l'ensemble de l'image. Par contre, une altération de la sémantique résultera en une modification forte mais localisée des données. On cherchera donc à utiliser des fonctions de hachage à seuil, qui tolèrent des modifications inférieures à une certaine valeur mais réagissent à des variations localisées trop fortes.

Cette fonctionnalité est mise en oeuvre lors de l'étape 14. Le procédé sélectionne les blocs de transformée en cosinus discrète (blocs DCT) appartenant aux zones d'intérêt au sein du flux vidéo compressé et les concatène pour obtenir un message. Ce message est fourni en entrée à un algorithme de hachage visuel, 14, qui permet de calculer un condensé 15 de la partie de l'image constituée par lesdites zones d'intérêt. Dans le cas d'une utilisation du procédé couplée au standard de compression vidéo H.264, les blocs à considérer pour l'obtention du message sont des blocs de transformée entière. De façon générale, toute transformée équivalente qui pourrait être définie dans d'éventuels futurs ou anciens standards de compression vidéo reste compatible du procédé selon l'invention. L'algorithme de hachage visuel utilisé peut être, par exemple, un algorithme de type SHA-1 tel que décris par le document référencé « FIPS PUB 180-3, Secure Hash Standard » disponible à l'adresse internet http://csrc.nist.gov/encryption/tkhash.html. Dans ce cas, le message d'entrée dudit algorithme doit avoir une longueur de 2⁶⁴ bits, ledit message est éventuellement complété pour atteindre la longueur requise. Cette éventualité est prévue dans le standard SHA-1 qui reste donc compatible dans ce cas. Le condensé 15 a une longueur de 160 bits dans ce mode de réalisation. Tout autre algorithme permettant le calcul d'un condensé d'une image peut être utilisé.

L'étape 16 du procédé met ensuite en oeuvre une fonction de cryptage ou chiffrement du condensé 15 obtenu via l'étape précédente 14. L'algorithme de chiffrement utilisé peut être, par exemple, un algorithme de chiffrement asymétrique ou un algorithme AES (Advanced Encryption Standard). Un condensé crypté 17 est obtenu après cette étape. Une fois ce résultat obtenu, la suite du procédé consiste à enfouir ledit condensé crypté 17 dans les zones de moindre importance de l'image par le biais d'une étape de tatouage numérique 18.

Au préalable, une carte de tatouage 11 est définie avant de commencer à traiter la séquence et cela sans connaissance, a priori, du flux vidéo compressé 10. Cette carte détermine tous les blocs de l'image qui peuvent contenir l'information à enfouir. Il peut arriver que des blocs associés aux zones d'intérêt Z1i déterminées à l'issu de l'étape d'analyse dans le domaine compressé 12 appartiennent à cette carte de tatouage, leur position n'étant pas connue au préalable. Comme il n'est pas souhaitable d'altérer le rendu visuel des dites zones, même de façon peu perceptible, on se contentera de vérifier avant le tatouage de chaque bloc son appartenance à une zone d'intérêt : si c'est le cas, le processus de tatouage passe automatiquement au bloc suivant, sinon le bloc courant est éligible pour enfouir la portion du condensé courante. Dans un mode de réalisation mettant en oeuvre une compression vidéo utilisant la transformée en cosinus discrète DCT (Discrete Cosine Transform), chaque bloc correspond à 8x8 pixels. Pour une résolution standard de 720x576 pixels, il y a donc 90x72 blocs pour une image, soit 6480 blocs potentiels auxquels il convient d'enlever les blocs appartenant aux zones d'intérêt Z1i. Dans l'exemple de mise en oeuvre de l'étape 16, le condensé crypté 17 a une longueur de 160 bits, il convient dans ce cas de sélectionner 160 blocs parmi ceux disponibles pour permettre d'enfouir la totalité du condensé crypté dans le flux compressé 10. La carte de tatouage 11 étant générée au démarrage du procédé, à ce stade il n'est pas possible de connaitre le nombre exact de blocs disponibles pour le tatouage car l'étape d'analyse 12 permettant de déterminer les zones d'intérêt 13 et donc le nombre de blocs associés n'a pas encore été effectuée. Lors de la génération de la carte de tatouage, il n'est donc pas possible de savoir si un nombre de blocs suffisant existe pour couvrir la longueur totale du condensé crypté 17, dans notre exemple. 160 bits. Pour résoudre ce problème, une solution consiste à déterminer arbitrairement un nombre maximum de blocs à sélectionner, d'effectuer le tatouage de ces blocs tant qu'ils ne font pas partie des zones d'intérêt et tant que la fin de l'image n'est pas atteinte. Si à la fin de ce processus, les 160 bits n'ont pas tous été utilisés, l'opération est tout de même arrêtée. Le condensé crypté tatoué au sein du flux compressé 10 aura, dans ce cas, une longueur inférieure à celui calculé lors de l'étape 16.

L'étape 18 de tatouage numérique permettant l'enfouissement du condensé crypté 17 dans le flux compressé 10, à partir de la connaissance des zones d'intérêt 13 d'une image et de la carte de tatouage 11 peut, par exemple, être réalisée de la façon décrite dans la demande de brevet français 2896938.

A l'établissement de la carte de tatouage, une fois les blocs sélectionnés, pour chacun d'eux, deux coefficients transformés C₁ et C₂ sont tirés aléatoirement. Lesdits coefficients sont testés de la façon suivante : si abs(abs(C₁)- abs(C₂)), où la notation abs() correspond à la fonction valeur absolue d'un nombre, est inférieur à un seuil prédéterminé, le tatouage peut avoir lieu sur le bloc correspondant car le rendu visuel sera imperceptible. Dans le cas contraire, on passe au bloc suivant.

La relation d'ordre entre abs(C₁) et abs(C₂) est alors testée et ces 2 coefficients sont modifiés si besoin afin qu'ils reflètent la valeur du bit du condensé crypté 17 à enfouir « 0 » ou « 1 ». L'algorithme suivant est mis en oeuvre :
- Pour insérer un bit « 1 »,
   ο Si abs(C₁) > abs(C₂), on ne change rien
   ο Si abs(C₁) ≤ abs(C₂), on calcule ε = abs(C₂) - abs(C₁) et on modifie la valeur de C₁, C₁ = C₁ + s + 1 si C₁>0, C₁= C₁ - ε - 1 sinon.
- Pour insérer un bit « 0 »,
   ο Si abs(C₁) < abs(C₂), on ne change rien
   ο Si abs(C₁) ≥ abs(C₂), on calcule ε = abs(C₁) - abs(C₂) et on modifie la valeur de C₂, C₂ = C₂ + ε + 1 si C₂>0, C₂= C₂ - ε - 1 sinon.

Dans une variante de réalisation, l'information tatouée au sein du flux compressé peut consister en une autre donnée telle que, par exemple, une alarme déclenchée suite à une opération d'analyse d'activité effectuée sur la séquence vidéo en lieu et place du condensé permettant la vérification d'intégrité. L'analyse dans le domaine compressée peut en effet aboutir à la génération de messages de plus haut niveau tels que, par exemple, la présence d'un véhicule mobile dans une zone donnée ou une information sur les caractéristiques d'un objet telles que sa couleur ou sa taille ou bien encore tout simplement une alarme indiquant qu'un objet d'une taille spécifiée a été détecté dans une zone de l'image. Ces messages peuvent également être enfouis dans la séquence via le procédé d'enfouissement selon l'invention. L'étape d'analyse 12 permet dans ce cas de produire une information pertinente et exploitable directement par l'étape de tatouage 18. La figure 6 illustre une variante de réalisation dans laquelle le flux compressé tatoué 19 obtenu via le procédé selon l'invention décrit précédemment est utilisé afin de vérifier l'intégrité des zones d'intérêt de la séquence vidéo transmise. Le flux compressé tatoué 19 est soumis aux mêmes étapes 12, 14 et 16 que précédemment afin d'obtenir un condensé crypté 17 identique à celui décrit sur la figure 5. En parallèle une étape 20 permet de récupérer le condensé crypté tatoué 21 enfouit au sein du flux compressé tatoué 19. Cette étape est réalisée en utilisant la carte de tatouage 11 précédemment décrite. Une comparaison 22 des deux condensés 17 et 21 permet d'obtenir une information de validation de l'intégrité des zones d'intérêts de la séquence 23. Cette comparaison est faite sur la longueur du condensé crypté tatoué 21 qui peut être plus court que celui 17 généré via les étapes de hachage 14 et cryptage 16, comme expliqué précédemment. Dans ce cas, la comparaison est faite uniquement sur la partie commune des deux condensés 21 et 17, validant seulement en partie l'intégrité. Une alarme mineure précisant que l'image considérée n'est validée que partiellement peut être renvoyée, dans ce cas, à l'utilisateur final.

La figure 7 représente un schéma bloc d'un dispositif selon l'invention représentant un émetteur vidéo 30 adapté pour mettre en oeuvre les étapes décrites avec la figure 5. L'émetteur vidéo 30 comprend un module d'analyse vidéo 31 recevant le flux vidéo compressé F et adapté à déterminer les différentes zones d'intérêt Z1i, un module 32 réalisant une fonction de hachage puis cryptage des coefficients transformés des zones Z1i et fournissant à sa sortie un condensé crypté de l'image, un module de tatouage numérique 33 adapté à insérer ledit condensé au sein du flux compressé sans altérer le rendu visuel de la séquence vidéo et enfin un module de communication 34 permettant au dispositif de transmettre à la fois le flux vidéo compressé tatoué Fₜ et une carte de tatouage générée en début de processus par le module 33.

La figure 8 représente un schéma bloc d'un dispositif selon l'invention représentant un récepteur vidéo 40 adapté pour mettre en oeuvre les étapes décrites à la figure 6. Le récepteur vidéo 40 comprend un module de réception 41 permettant au dispositif de recevoir à la fois un flux vidéo compressé tatoué Fₜ et une carte de tatouage associée générés tous deux par le procédé selon l'invention décrit par la figure 5. Le récepteur vidéo comprend également un module 42 qui effectue une analyse dans le domaine compressé du flux Fₜ et permet d'identifier les différentes zones d'intérêt Z1i, un module 43 réalisant une fonction de hachage puis cryptage des coefficients transformés des zones Z1i et fournissant à sa sortie un condensé crypté de l'image, un module 44 réalisant la récupération dans le flux Fₜ d'un condensé crypté tatoué et la comparaison avec le condensé crypté délivré par le module 43. Le module 44 produit en sortie une décision V de validation d'intégrité des zones d'intérêt de la séquence.

Le procédé et le système selon l'invention présentent plusieurs avantages notamment de garantir que certaines zones d'intérêts de l'image n'ont pas été modifiées. Le fait d'utiliser l'analyse dans le domaine compressé permet d'effectuer l'ensemble des traitements sans décompresser le flux vidéo. Les ressources matérielles sont réduites de ce fait comparativement aux méthodes de l'art antérieur et permettent l'utilisation de systèmes embarqués. La signature, ou condensé crypté, obtenue via le procédé selon l'invention permet de cibler uniquement les zones d'intérêt et son enfouissement par tatouage sur le reste de l'image permet une vérification indépendante de chaque image tout en préservant lesdites zones d'intérêt de toute modification. Un autre avantage réside dans le fait de pouvoir enfouir au sein du flux vidéo compressé des messages fournissant une information sur les caractéristiques d'un objet présent dans la séquence vidéo, par exemple sa taille, sa couleur, ou même sa présence. Les informations enfouies dans le flux vidéo compressé via le procédé selon l'invention peuvent être indépendantes d'une image à l'autre. Les caractéristiques d'une image donnée au sein du flux vidéo peuvent être prises en compte pour déterminer le type d'information à enfouir. Par exemple, une signature permettant la vérification de l'intégrité du contenu sera préférablement enfouie dans une image fixe encodée dans son intégralité, dite image "intra", plutôt que dans une image prédite à partir d'une autre.

## Revendications

1. Procédé d'enfouissement d'une séquence binaire (17) dans une séquence vidéo ou un flux vidéo compressé (10), ledit flux pouvant être décomposé en plusieurs types d'objets, le procédé s'appliquant sur au moins une image contenue dans ladite séquence vidéo **caractérisé en ce qu'**il comporte au moins les étapes suivantes :
a) analyser la séquence vidéo dans le domaine compressé afin de définir pour une image compressée donnée au moins un premier type d'objets ou groupe d'objets à traiter définissant une zone d'intérêt (13),
b) générer une carte de tatouage (11) définissant l'ensemble des blocs de pixels de la séquence vidéo éligibles pour l'opération d'enfouissement, ainsi que deux coefficients C₁ et C₂ issus d'une transformée en fréquence pour chacun des dits blocs, lesdits coefficients C₁ et C₂ étant tirés aléatoirement parmi l'ensemble des coefficients obtenus par application d'une transformée en fréquence sur un bloc de pixels donné,
c) pour l'image compressée courante, exclure de la carte de tatouage les blocs associés à la zone d'intérêt (13), ainsi que ceux dont les coefficients C₁ et C₂ définis par la carte de tatouage ne répondent pas au critère suivant :
abs(abs(C₁)-abs(C₂)) < S où S est un seuil prédéterminé et abs() la fonction valeur absolue d'un entier.
d) appliquer une fonction de tatouage numérique (18) sur chaque bloc disponible obtenu à l'étape c) afin d'obtenir un flux compressé tatoué (19) par une séquence binaire (17) de la façon suivante :
➢ Pour insérer un bit « 1 » de ladite séquence binaire (17),
- Si abs(C₁) > abs(C₂), on ne change rien,
- Si abs(C₁) ≤ abs(C₂), on calcule ε = abs(C₂) - abs(C₁) et on modifie la valeur de C₁, C₁ = C₁ + ε + 1 si C₁>0, C₁= C₁ - ε - 1 sinon.
➢ Pour insérer un bit « 0 » de ladite séquence binaire (17),
- Si abs(C₁) < abs(C₂), on ne change rien
- Si abs(C₁) ≥ abs(C₂), on calcule ε = abs(C₁) - abs(C₂) et on modifie la valeur de C₂, C₂ = C₂ + ε + 1 si C₂>0, C₂= C₂ - ε - 1 sinon.

2. Procédé selon la revendication 1, **caractérisé en ce que** la séquence binaire (17) est un condensé de l'image obtenu via l'étape suivante :
➢ concaténer les coefficients issus de la transformée en fréquence des blocs appartenant aux dits objets ou groupes d'objets obtenus définissant une zone d'intérêt (13) et appliquer au résultat une fonction de hachage visuel (14) générant en sortie un condensé (15) de l'image.

3. Procédé selon la revendication 2, **caractérisé en ce que** le condensé de l'image (15) est crypté via une fonction de cryptage (16).

4. Procédé selon la revendication 2, **caractérisé en ce que** le flux compressé tatoué (19) est traité afin de vérifier l'intégrité de la séquence vidéo en exécutant les étapes suivantes :
➢ analyser le flux compressé tatoué (19) dans le domaine compressé afin de définir, pour une image compressée donnée au moins un premier type d'objets ou groupe d'objets à traiter définissant une zone d'intérêt (13),
➢ concaténer les coefficients issus de la transformée en fréquence des blocs appartenant aux dits objets ou groupes d'objets obtenus définissant une zone d'intérêt (13) et appliquer au résultat une fonction de hachage visuel (14) générant en sortie un condensé de l'image (15),
➢ récupérer le condensé tatoué (21) dans le flux compressé tatoué (19) à partir de la carte de tatouage (11),
➢ effectuer une comparaison dudit condensé tatoué (21) avec le condensé (15).

5. Procédé selon la revendication 3, **caractérisé en ce que** le flux compressé tatoué (19) est traité afin de vérifier l'intégrité de la séquence vidéo en exécutant les étapes suivantes :
➢ analyser le flux compressé tatoué (19) dans le domaine compressé afin de définir, pour une image compressée donnée au moins un premier type d'objets ou groupe d'objets à traiter définissant une zone d'intérêt (13),
➢ concaténer les coefficients issus de la transformée en fréquence des blocs appartenant aux dits objets ou groupes d'objets obtenus définissant une zone d'intérêt (13) et appliquer au résultat une fonction de hachage visuel (14) générant en sortie un condensé (15) de l'image,
➢ appliquer, une fonction de cryptage (16) au condensé précédemment obtenu afin d'obtenir un condensé crypté (17),
➢ récupérer le condensé tatoué (21) dans le flux compressé tatoué (19) à partir de la carte de tatouage (11),
➢ effectuer une comparaison dudit condensé tatoué (21) avec le condensé crypté (17).

6. Procédé selon les revendications 3 ou 5, **caractérisé en ce que** la fonction de cryptage (16) met en oeuvre un algorithme de chiffrement asymétrique ou un algorithme de chiffrement AES (Advanced Encryption Standard).

7. Procédé selon l'une des revendications précédentes, **caractérisé en ce que** la fonction de hachage visuel (14) met en oeuvre l'algorithme SHA-1 et que le condensé crypté (17) ait une taille de 160 bits.

8. Procédé selon la revendication 1, **caractérisé en ce que** la séquence binaire (17) est un message, généré par l'étape d'analyse dans le domaine compressé (12), comportant une indication sur les caractéristiques des zones d'intérêt (13).

9. Procédé selon l'une des revendications précédentes, **caractérisé en ce que** la séquence vidéo est produite par un standard MPEG ou un standard ITU.

10. Dispositif pour tatouer numériquement au moins une partie d'un flux vidéo ou d'une séquence vidéo compressée comportant un émetteur (30) et un récepteur (40) **caractérisé en ce que** :
➢ ledit émetteur (30) comporte au moins les éléments suivants adaptés à exécuter les étapes du procédé selon l'une des revendications 1 à 3 et 6 à 9 : un module d'analyse dans le domaine compressé (31), un module de hachage visuel (32), un module de tatouage numérique (33) et un module de transmission (34) du flux tatoué,
➢ ledit récepteur (40) comporte au moins les éléments suivants adaptés à exécuter les étapes du procédé selon l'une des revendications 4 à 9 : un module de transmission (41), un module d'analyse (42), un module de hachage visuel (43), un module de validation d'intégrité (44).

## Patentansprüche

1. Verfahren zum Einbetten einer Binärsequenz (17) in eine Videosequenz oder einen komprimierten Videostrom (10), wobei der Strom in mehrere Objekttypen zerlegt werden kann, wobei das Verfahren auf wenigstens ein Bild anwendbar ist, das in der Videosequenz enthalten ist, **dadurch gekennzeichnet, dass** es wenigstens die folgenden Schritte beinhaltet:
a) Analysieren der Videosequenz in der komprimierten Domäne, um für ein gegebenes komprimiertes Bild wenigstens eine(n) erste(n) zu verarbeitende(n) Objekttyp oder -gruppe zu definieren, der/die eine Zone von Interesse (13) definiert;
b) Erzeugen einer Wasserzeichenkarte (11), die den Satz von Pixelblöcken der Videosequenz, die für den Einbettungsvorgang in Frage kommen, sowie zwei Koeffizienten C₁ und C₂ definiert, die von einer Frequenztransformierten für jeden der Blöcke kommen, wobei die Koeffizienten C₁ und C₂ zufällig aus dem Satz von Koeffizienten gezogen werden, die durch Anwenden einer Frequenztransformierten auf einen gegebenen Pixelblock erhalten werden;
c) Ausschließen, für das aktuelle komprimierte Bild, derjenigen Blöcke aus der Wasserzeichenkarte, die mit der Zone von Interesse (13) assoziiert ist, sowie derjenigen, deren durch die Wasserzeichenkarte definierten Koeffizienten C₁ und C₂ nicht dem folgenden Kriterium entsprechen:
abs(abs(C₁)- abs(C₂)) < S, wobei S ein vorbestimmter Schwellenwert und abs() die Absolutwertfunktion einer ganzen Zahl ist;
d) Anwenden einer digitalen Wasserzeichenfunktion (18) auf jeden in Schritt c) erhaltenen verfügbaren Block, um einen wasserzeichenmarkierten komprimierten Strom (19) durch eine Binärsequenz (17) auf die folgende Weise zu erhalten:
➢ zum Einführen eines "1" Bits der Binärsequenz (17):
- wenn abs(C₁) > abs(C₂) ist, verändert sich nichts;
- wenn abs(C₁) ≤ abs(C₂), wird ε = abs(C₂) - abs(C₁) berechnet und der Wert von C₁ wird modifiziert in C₁ = C₁ + ε + 1, wenn C₁ > 0, ansonsten in C₁ = C₁ - ε - 1;
➢ zum Einführen eines "0" Bits der Binärsequenz (17):
- wenn abs(C₁) < abs(C₂) ist, verändert sich nichts;
- wenn abs(C₁) ≥ abs(C₂), wird ε = abs(C₁) - abs(C₂) berechnet und der Wert von C₂ wird modifiziert in C₂ = C₂ + ε + 1, wenn C₂ > 0, ansonsten in C₂ = C₂ - ε - 1.

2. Verfahren nach Anspruch 2, **dadurch gekennzeichnet, dass** die Binärsequenz (17) ein Extrakt aus dem Bild ist, das mit dem folgenden Schritt erhalten wurde:
➢ Verketten der Koeffizienten, die von der Frequenztransformierten der Blöcke kommen, die zu den erhaltenen Objekten oder Objektgruppen gehören, die eine Zone von Interesse (13) definieren, und Anwenden einer visuellen Hash-Funktion (14) auf das Ergebnis, die einen Extrakt (15) des Bildes als Ausgang erzeugt.

3. Verfahren nach Anspruch 2, **dadurch gekennzeichnet, dass** der Extrakt des Bildes (15) durch eine Verschlüsselungsfunktion (16) verschlüsselt wird.

4. Verfahren nach Anspruch 2, **dadurch gekennzeichnet, dass** der wasserzeichenmarkierte komprimierte Strom (19) verarbeitet wird, um die Integrität der Videosequenz zu überprüfen, durch Ausführen der folgenden Schritte:
➢ Analysieren des wasserzeichenmarkierten komprimierten Stroms (19) in der komprimierten Domäne, um für ein gegebenes komprimiertes Bild wenigstens eine(n) erste(n) zu verarbeitende(n) Objekttyp oder -gruppe zu definieren, der/die eine Zone von Interesse (13) definiert;
➢ Verketten der Koeffizienten, die von der Frequenztransformierten der Blöcke kommen, die zu den erhaltenen Objekten oder Objektgruppen gehören, die eine Zone von Interesse (13) definieren, und Anwenden einer visuellen Hash-Funktion (14) auf das Ergebnis, die einen Extrakt (15) des Bildes als Ausgang erzeugt;
➢ Wiederherstellen des wasserzeichenmarkierten Extrakts (21) in dem wasserzeichenmarkierten komprimierten Strom (19) von der Wasserzeichenkarte (11);
➢ Durchführen eines Vergleichs des wasserzeichenmarkierten Extrakts (21) mit dem Extrakt (15).

5. Verfahren nach Anspruch 3, **dadurch gekennzeichnet, dass** der wasserzeichenmarkierte komprimierte Strom (19) verarbeitet wird, um die Integrität der Videosequenz zu prüfen, durch Ausführen der folgenden Schritte:
➢ Analysieren des wasserzeichenmarkierten komprimierten Stroms (19) in der komprimierten Domäne, um für ein gegebenes komprimiertes Bild wenigstens eine(n) erste(n) zu verarbeitende(n) Typ oder Gruppe von Objekten zu definieren, der/die eine Zone von Interesse (13) definiert;
➢ Verketten der Koeffizienten, die von der Frequenztransformierten der Blöcke kommen, die zu den erhalten Objekten oder Objektgruppen gehören, die eine Zone von Interesse (13) definieren, und Anwenden einer visuellen Hash-Funktion (14) auf das Ergebnis, die einen Extrakt (15) des Bildes als Ausgang erzeugt;
➢ Anwenden einer Verschlüsselungsfunktion (16) auf den zuvor erhaltenen Extrakt, um einen verschlüsselten Extrakt (17) zu erhalten;
➢ Wiederherstellen des wasserzeichenmarkierten Extrakts (21) in dem wasserzeichenmarkierten komprimierten Strom (19) von der Wasserzeichenkarte (11);
➢ Durchführen eines Vergleichs des wasserzeichenmarkierten Extrakts (21) mit dem verschlüsselten Extrakt (17).

6. Verfahren nach Anspruch 3 oder 5, **dadurch gekennzeichnet, dass** die Verschlüsselungsfunktion (16) einen asymmetrischen Verschlüsselungsalgorithmus oder einen AES-(Advanced Encryption Standard)-Verschlüsselungsalgorithmus implementiert.

7. Verfahren nach einem der vorherigen Ansprüche, **dadurch gekennzeichnet, dass** die visuelle-Hash-Funktion (14) den SHA-1 Algorithmus implementiert, und dadurch, dass die Größe des verschlüsselten Extrakts (17) 160 Bit beträgt.

8. Verfahren nach Anspruch 1, **dadurch gekennzeichnet, dass** die Binärsequenz (17) eine Nachricht ist, die durch den Analyseschritt in der komprimierten Domäne (12) erzeugt wird und eine Anzeige der Charakteristiken der Zonen von Interesse (13) enthält.

9. Verfahren nach einem der vorherigen Ansprüche, **dadurch gekennzeichnet, dass** die Videosequenz durch einen MPEG-Standard oder durch einen ITU-Standard erzeugt wird.

10. Vorrichtung zum digitalen Wasserzeichenmarkieren von wenigstens einem Teil eines Videostroms oder einer komprimierten Videosequenz, die einen Sender (30) und einen Empfänger (40) umfasst, **dadurch gekennzeichnet, dass**:
➢ der Sender (30) wenigstens die folgenden Elemente umfasst, die zum Ausführen der Schritte des Verfahrens nach einem der Ansprüche 1 bis 3 und 6 bis 9 ausgelegt sind: ein Analysemodul in der komprimierten Domäne (31), ein visuelles Hash-Modul (32), ein digitales Wasserzeichenmarkierungsmodul (33) und ein Modul (34) zum Übertragen des wasserzeichenmarkierten Stroms;
➢ der Empfänger (40) wenigstens die folgenden Elemente umfasst, die zum Ausführen der Schritte des Verfahrens nach einem der Ansprüche 4 bis 9 ausgelegt sind: ein Sendemodul (41), ein Analysemodul (42), ein visuelles Hash-Modul (43) und ein Integritätsvalidierungsmodul (44).

## Claims

1. A method for embedding a binary sequence (17) in a video sequence or a compressed video stream (10), said stream being designed to be broken down into several types of objects, said method being applicable to at least one image that is contained in said video sequence, **characterised in that** it comprises at least the following steps:
a) analysing the video sequence in the compressed domain in order to define, for a given compressed image, at least one first type of objects or group of objects to be processed, which defines a zone of interest (13);
b) generating a watermark map (11) that defines the set of pixel blocks of the video sequence that are eligible for the embedding operation, as well as two coefficients C₁ and C₂ coming from a frequency transform for each of said blocks, said coefficients C₁ and C₂ being randomly drawn from the set of coefficients obtained by applying a frequency transform to a given block of pixels;
c) excluding, for the current compressed image, from the watermark map the blocks that are associated with the zone of interest (13) as well as those for which the coefficients C₁ and C₂ that are defined by said watermark map do not comply with the following criterion:
abs(abs(C₁)- abs(C₂)) < S, where S is a predetermined threshold and abs() is the absolute value function of an integer;
d) applying a digital watermark function (18) to each available block that is obtained during step c) in order to obtain a watermarked compressed stream (19) by a binary sequence (17) in the following manner:
➢ to insert a "1" bit of said binary sequence (17):
- if abs(C₁) > abs(C₂), nothing is changed;
- if abs(C₁) ≤ abs(C₂), ε = abs(C₂) - abs(C₁) is calculated and the value of C₁ is modified to C₁ = C₁ + ε + 1 if C₁ > 0, otherwise to C₁ = C₁ - ε - 1;
➢ to insert a "0" bit of said binary sequence (17):
- if abs(C₁) < abs(C₂), nothing is changed;
- if abs(C₁) ≥ abs(C₂), ε = abs(C₁) - abs(C₂) is calculated and the value of C₂ is modified to C₂ = C₂ + ε + 1 if C₂ > 0, otherwise to C₂ = C₂ - ε - 1.

2. The method according to claim 1, **characterised in that** the binary sequence (17) is a digest of the image obtained via the following step:
➢ concatenating the coefficients coming from the frequency transform of the blocks that belong to said objects or groups of objects that are obtained, which define a zone of interest (13), and applying a visual hash function (14) to the result that generates a digest (15) of the image as output.

3. The method according to claim 2, **characterised in that** the digest of the image (15) is encrypted by an encryption function (16).

4. The method according to claim 2, **characterised in that** the watermarked compressed stream (19) is processed in order to verify the integrity of the video sequence by executing the following steps:
➢ analysing the watermarked compressed stream (19) in the compressed domain so as to define, for a given compressed image, at least one first type of objects or group of objects to be processed that defines a zone of interest (13);
➢ concatenating the coefficients coming from the frequency transform of the blocks belonging to said objects or groups of objects, which are obtained that define a zone of interest (13), and applying a visual hash function (14) to the result that generates a digest (15) of the image as output;
➢ recovering the watermarked digest (21) in the watermarked compressed stream (19) from the watermark map (11);
➢ carrying out a comparison of said watermarked digest (21) with the digest (15).

5. The method according to claim 3, **characterised in that** the watermarked compressed stream (19) is processed in order to verify the integrity of the video sequence by executing the following steps:
➢ analysing the watermarked compressed stream (19) in the compressed domain so as to define, for a given compressed image, at least one first type of objects or group of objects to be processed that defines a zone of interest (13);
➢ concatenating the coefficients coming from the frequency transformation of the blocks belonging to said objects or groups of objects, which are obtained that define a zone of interest (13), and applying a visual hash function (14) to the result that generates a digest (15) of the image as output;
➢ applying an encryption function (16) to the previously obtained digest in order to obtain an encrypted digest (17);
➢ recovering the watermarked digest (21) in the watermarked compressed stream (19) from the watermark map (11);
➢ carrying out a comparison of said watermarked digest (21) with the encrypted digest (17).

6. The method according to claim 3 or 5, **characterised in that** the encryption function (16) implements an asymmetric encryption algorithm or an AES (Advanced Encryption Standard) encryption algorithm.

7. The method according to any one of the preceding claims, **characterised in that** the visual hash function (14) implements the SHA-1 algorithm and **in that** the size of the encrypted digest (17) is 160 bits.

8. The method according to claim 1, **characterised in that** the binary sequence (17) is a message that is generated by the analysis step in the compressed domain (12), comprising an indication of the characteristics of the zones of interest (13).

9. The method according to any one of the preceding claims, **characterised in that** the video sequence is produced by an MPEG standard or by an ITU standard.

10. A device for digitally watermarking at least one part of a video stream or a compressed video sequence comprising a transmitter (30) and a receiver (40), **characterised in that**:
➢ said transmitter (30) comprises at least the following elements that are designed to execute the steps of the method according to any one of claims 1 to 3 and 6 to 9: an analysis module in the compressed domain (31), a visual hash module (32), a digital watermarking module (33) and a module (34) for transmitting the watermarked stream;
➢ said receiver (40) comprising at least the following elements that are designed to execute the steps of the method according to any one of claims 4 to 9: a transmission module (41), an analysis module (42), a visual hash module (43) and an integrity validation module (44).
